# EUROPEAN PATENT SPECIFICATION

(11) **EP 1 514 387 B1**
(45) Date of publication and mention of the grant of the patent: **16.12.2009**
(21) Application number: 03730246.0
(22) Date of filing: 20.05.2003
(51) Int. Cl.: H04L 12/56, H04L 29/06

(54) **A METHOD AND SYSTEM FOR LOCAL MOBILITY MANAGEMENT**
VERFAHREN UND SYSTEM FÜR LOKALE MOBILITÄTSVERWALTUNG
PROCEDE ET SYSTEME DE GESTION DE LA MOBILITE LOCALE

(30) Priority: 14.06.2002 FI 20021164
(43) Date of publication of application: 16.03.2005
(73) Proprietor: Nokia Corporation, 02150 Espoo (FI)
(72) Inventor: MÄENPÄÄ, Sanna, FIN-02170 Espoo (FI); VESTERINEN, Seppo, FIN-90460 Oulunsalo (FI)
(74) Representative: Simmelvuo, Markku Kalevi
(86) International application number: PCT/FI2003/000389
(87) International publication number: WO 2003/107600

(56) References cited:
- EP-A1- 1 009 141
- EP-A2- 1 009 134
- EP-A2- 1 124 396
- EP-A2- 1 128 632
- UM, TAI WON ET AL.: 'A study on path re-routing algorithms at the MPLS-based hierarchical mobile IP network' PROCEEDINGS OF IEEE REGION 10 INTERNATIONAL CONFERENCE ON ELECTRICAL AND ELECTRONIC TECHNOLOGY. TENCON (SINGAPORE) vol. 2, 19 August 2001 - 22 August 2001, pages 691 - 697, XP010556334
- CHEN CHYI-NAN ET AL.: 'Solving location problem of a mobile host by an agent group' SEVENTH IEEE INTERNATIONAL SYMPOSIUM ON PERSONAL, INDOOR AND MOBILE RADIO COMMUNICATIONS. PIMRC'96. (TAIPEI, TAIWAN) vol. 2, 15 October 1996 - 18 October 1996, pages 708 - 712, XP010209263

## Description

### FIELD OF THE INVENTION

The present invention relates to data communications. Particularly the present invention relates to the optimization of the performance of the Internet Protocol (IP) localized mobility concepts.

### BACKGROUND TO THE INVENTION

As the trend goes towards mobile internet, the complete internet protocol must be adopted in the mobile networks. A mobile terminal is assigned a unique IP-address so that data packets can be sent to the right terminal. The internet protocol has been used for a long time in fixed networks. There has not been need for mobility functionality until recently due to the new mobile devices with the possibility for packet switched data communications.

To provide the new functionality required by the mobility, a mobile internet protocol was introduced. The mobile internet protocol allocates two associated addresses for a mobile terminal: home address which enables the mobile terminal to be reachable with the same address regardless of its point of attachment and a care of address which enables to route the packets to the current point of attachment of the mobile terminal. This means that routing devices and transceiver stations of a mobile network must know and control the location of the mobile terminal and be able to efficiently route packets to the right terminal. At the moment, the IPv4 addressing scheme is in use but it will be replaced by the IPv6 in the future.

Within a radio access network (RAN) mobile terminals can move rapidly from one base station to another. A handover may occur when mobile stations move within a mobile network. When a mobile terminal moves from one base station to another, the routing must be changed. In the handover procedure, packets destined to the mobile terminals are directed to a base station. When the actual handover occurs packets will be directed to a new base station. This change must be fast to allow the data communication service continue at the selected quality of service. The handover can occur between similar network cells, for example from a GSM (Global System for Mobile communications) cell to another GSM cell, or between different type of networks, for example from a GSM network to a UMTS (Universal Mobile Telecommunications System) network.

New routing rules must be carried out within a mobile network for handover procedures. In routed networks, the routing rules are stored in routing tables. To change the routing table a routing table update message must be sent to all routers that the change effects to. The publication WO 0199458 introduces an efficient method for performing a mobile user terminal route update in a telecommunications network based on the internet protocol. The publication WO 0199458 teaches a method for updating the routing procedures. The method works in circuit and packet switched networks. In the method, a second base station sends new routing information to a routing element. The mobile device does not need to initiate the change of the routing tables. A benefit of the publication is that the router learns the new route early enough so that no data is lost in the handover procedure. The publication teaches the basic principles of the proxy localized management concept, in which the IP level local mobility management operations are hidden from the actual mobile device.

A system in which handovers within a domain are transparent to the home agent is known from EP 1009141.

The drawbacks of prior-art solutions are that the modifications are needed to the terminal side and the signalling over the air interface. Required changes to already existing terminals are hard to implement. In cases where the changes cannot be implemented by software only, the customer needs to update his/her terminal.

### PURPOSE OF THE INVENTION

The present invention teaches a method e.g. for the MIPv6 (Mobile Internet Protocol, version 6) in a manner that localization mobility management extensions are not needed. Furthermore, the purpose of the present invention is to describe how IPv6 handover methods currently under definition in the IETF (Internet Engineering Task Force) can be utilized in these concepts. The same method can be appliedalso with MIPv4 ((Mobile Internet Protocol, version 4) with slight modifications.

### SUMMARY OF THE INVENTION

The present invention describes a method and system in which proxy local mobility management functions are utilized e.g. with the MIPv6. The invention neither requires any changes to the mobile nodes using the MIPv6 nor any extension for local mobility management. Furthermore, the present invention describes a method in which IPv6 handover methods can be utilized in the concepts without changes in the standards or definitions set by the IETF.

In the present invention, layer 3 mobile agent information is broadcast over the air interface instead of the access router prefix information. In order to know when a mobile node is away from home, it must get a temporary address which is called as a care of address (CoA). According to the present invention, a mobile node generates a CoA based on the mobile agent's prefix and mobile node's layer 2 address or some other locally unique identifier.

The generated CoA is used when the mobile node sends a binding update message towards the home agent or correspondent node. Thus, the mobile node needs to support only basic MIPv6 and it does not have to be aware of the local mobility management taking place between the mobile agent and cellular access node. The local mobility management utilized in the present invention is based e.g. on mobile IPv6 regional registration protocol (MIPv6RR), hierarchical mobile IPv6 (HMIPv6) or basic mobile IPv6.

The present invention has various benefits. Compared to other local mobility management solutions, the proxy mechanism reduces the MIPv6+ extension signalling over the radio interface, which is important for capacity limited cellular radio interfaces. The present invention takes an advantage of the MIPv6 regional forwarding that avoids an extra 40-byte overhead due to tunnelling. The proxy care of address (PcoA) assigned during initial registration with the mobile agent can be kept unchanged until the MA handover occurs. This reduces signalling over the air interface because the update binding has to be sent to the mobile node only when it moves from a mobile agent to another. The present invention does not require layer 3 signalling at all over the air during handovers because layer 3 mobility activies are hidden from the mobile node, and a proxy function in the cellular access point (CAP) takes care of the required MIPv6 signalling. The route switching happens in the mobile agent so there is no need for routing via an access router. Because the layer 2 is aware of the layer 3 issues, a proper synchronization can be implemented between layer 2 and 3 handovers. Layer 3 context transfer can be triggered optionally from the target CAP at an optimal point of the handover scenario.

### BRIEF DESCRIPTION OF THE FIGURES

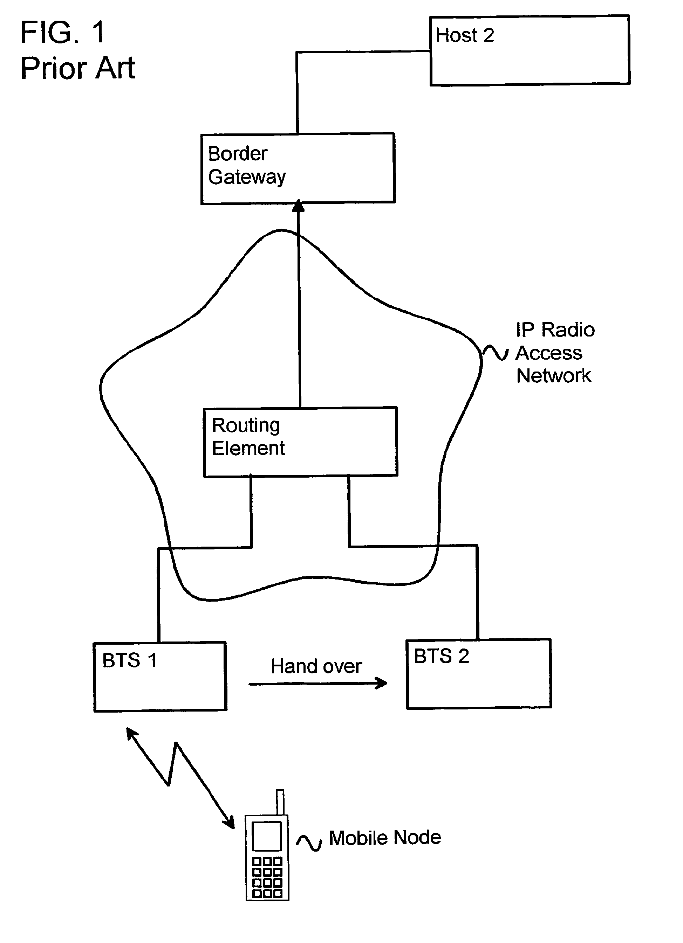

Figure 1 illustrates a prior-art solution in which an access router is used,
Figure 2 illustrates a system in accordance with the invention,
Figure 3 illustrates the signalling of the initial registration with the proxy model,
Figure 4 illustrates binding update packets used in the initial registration,
Figure 5 illustrates the signalling of the network initiated inter mobile agent relocation, and
Figure 6 illustrates binding update packets used in the network initiated inter mobile agent relocation.

### DETAILED DESCRIPTION OF THE INVENTION

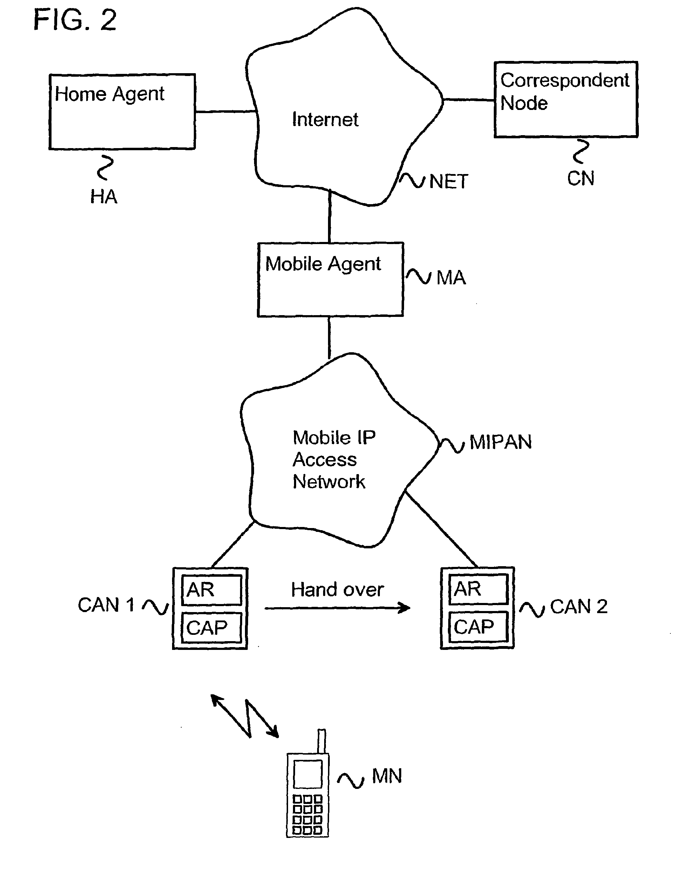

Figure 2 represents a system in accordance with the present invention. In the system, a mobile node MN is connected to a cellular access node CAN. There are two nodes, CAN 1 and CAN 2, but the amount of nodes can vary. Cellular access nodes CAN are connected to the mobile IP access network MIPAN that is connected to the mobile agent MA. More accurately, the mobile IP access network MIPAN forms the Local Mobility Domain that is under management of the mobile agent MA. The mobile agent MA is connected to the home agent HA and correspondent node CN via the Internet NET. The cellular access node CAN consists of an access router AR and a cellular access point CAP. Proxy functions are implemented in the cellular access point CAP. The system of Figure 2 has the advantages over the prior-art solutions that it does not need any separate routing element. In the present invention, layer 3 MA prefix information is broadcast over the air interface instead of access router AR prefix information. The mobile node MN generates a care of address (CoA) based on the mobile agent MA prefix and mobile node layer 2 address. Instead of the layer 2 address some other locally unique identifier may be used. CoA is then used when the mobile node MN sends binding updates towards the home agent HA or correspondent node CN. Thus, the mobile node MN needs to support only basic MIPv6 and it does not has to be aware of the local mobility management taking place between the cellular access node CAN and mobile agent MA.

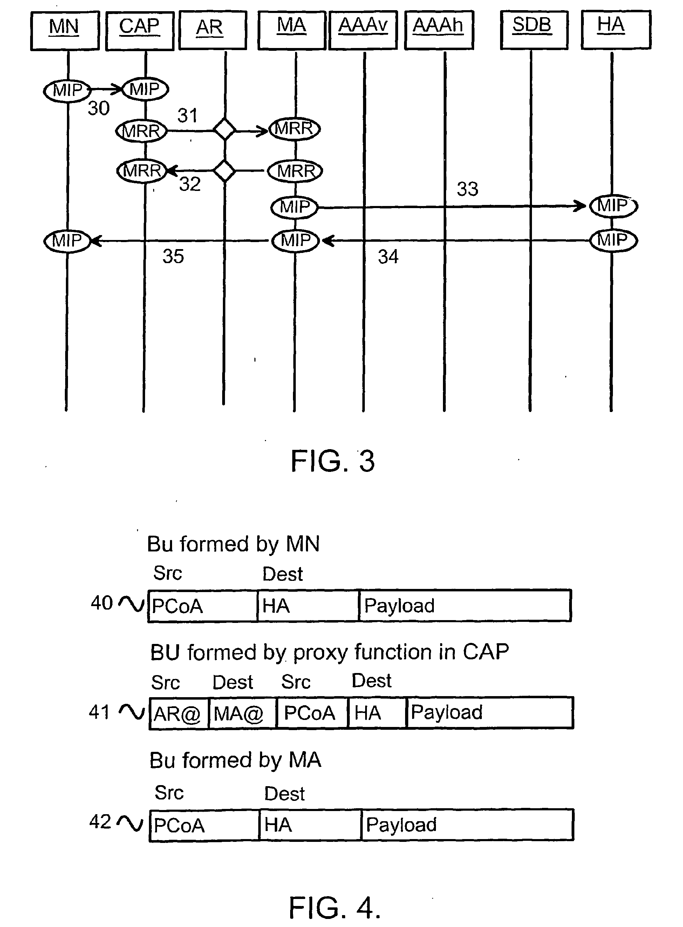

Figure 3 illustrates the signalling in the MIPv6 initial registration and binding entry creation in the mobile agent MA. The mobile node MN initiates the signalling by sending a binding update (BU) message to the cellular access point CAP, step 30. MIP in Figure 3 refers to mobile ip. The CAP encapsulates the message and changes the source address of the packet to AR@ (access router address). The CAP sends a proxy binding update to the mobile agent MA, step 31. MRR in Figure 3 refers to mobile ip regional registration. The mobile agent MA creates a binding entry including the proxy care of address (PcoA) based on the mobile agent MA prefix and mobile node's layer 2 address associated with AR@. The mobile agent responds to the CAP with a BU acknowledgement message, step 32. The mobile agent MA sends the changed binding information to the home agent HA, step 33. The home agent HA responds with the acknowledgement message, step 34. The mobile agent MA sends an acknowledgement message to the mobile node, step 35. Every time the access router AR changes, the mobile agent's PCoA is associated with the new AR@.

Figure 4 illustrates binding update packet structures. Packet 40 is used in sending the initial packet for binding update. Packet 40 is formed in a mobile node. In the packet 40, the source address is PCoA and the destination is the address of the home agent. Packet 41 is formed by encapsulating the packet 40. In the encapsulation process AR@ is set to the source address and the mobile agent's address MA@ is set to the destination address. The packet 42 formed by the mobile agent is similar to the packet 40. The content and length of the fields are not fixed but can be chosen according to application needs.

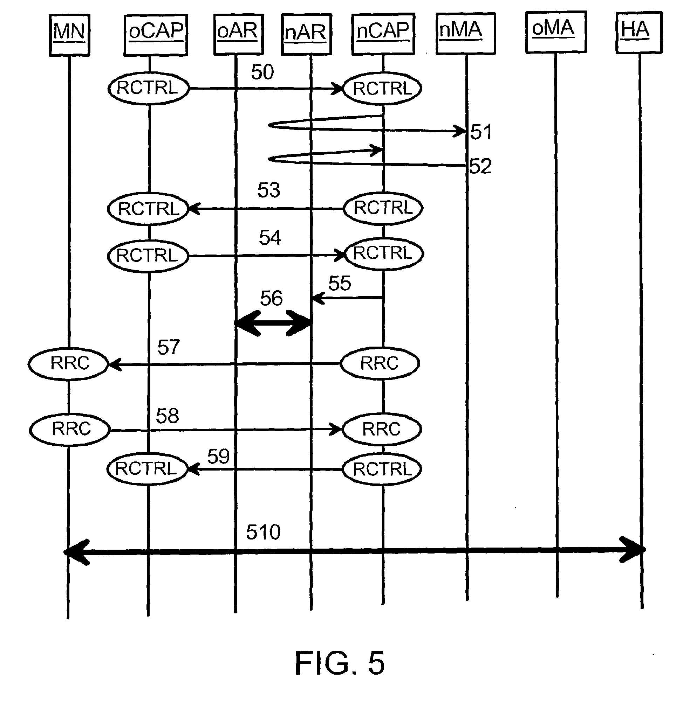

Figure 5 illustrates signalling flow in inter mobile agent relocation. In this example the serving CAP relocation is described according to WCDMA (Wide-band Code Division Multiple Access) soft handover case. A relocation request is sent from the old cellular access point oCAP to the new cellular access point nCAP, step 50. RCTRL in Figure 5 refers to radio access control protocol between cellular access points. The nCAP sends a proxy binding update packet to the new mobile agent nMA via the new access router nAR, step 51. New mobile agent nMA responds with an acknowledgement message, step 52. After receiving the acknowledgement message, the nCAP sends a relocation response to the oCAP, step 53. The oCAP sends relocation information to the nCAP, step 54. Then, the nCAP sends layer 3 context trigger to the new access router nAR, step 55. The new access router nAR and old access router oAR start the layer 3 context transfer, step 56. Universal Terrestrial Radio Network (UTRAN) mobility information is sent to the mobile node MN, step 57 (WCDMA soft handover). RRC in Figure 5 refers to the radio resource control protocol. The mobile node MN responds by sending a confirmation message to the new CAP, step 58. A relocation complete message is sent to old CAP, step 59. The procedure is then continued with binding entry creation, step 510. The binding entry creation signalling is illustrated in Figure 3.

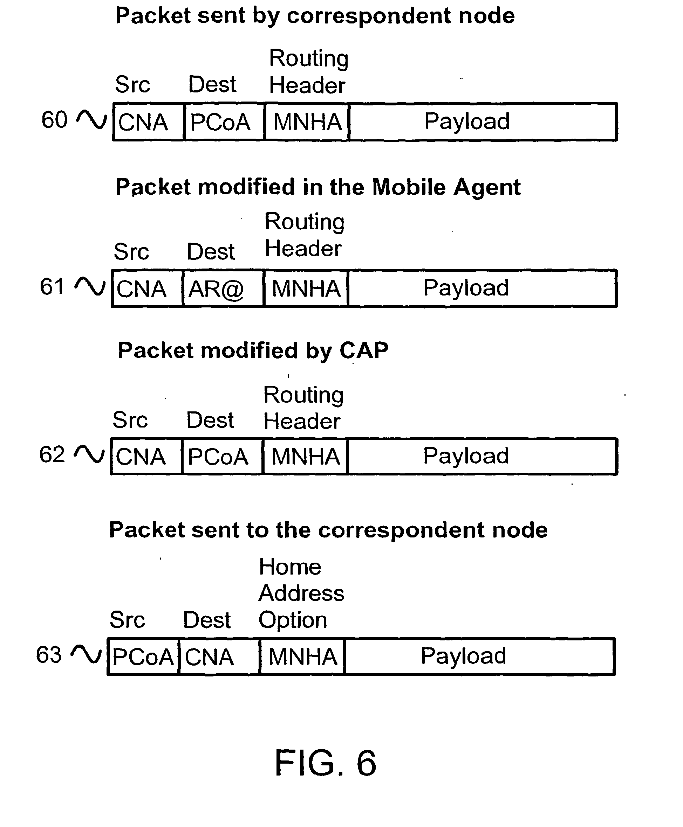

Figure 6 illustrates packets used in mobile IPv6 regional forwarding. The original regional forwarding is specified in the IETF draft "mobile Ipv6 Regional Forwarding", March 2001. The original regional forwarding is slightly modified because the proxy function is located in the cellular access point CAP. The proxy care of address (PcoA) is based on a mobile agent's prefix and mobile node's layer 2 address associated with AR@. AR@ is based on access router prefix and mobile node's layer 2 address. The forwarding of packets from correspondent node to the mobile node is initiated by sending the packet 60. In the packet, the source is the correspondent node's address CNA, the destination field is PCoA and the mobile node's home address is used as a routing header MNHA. The mobile agent modifies the packet 60 by setting AR@ to the destination field. When the mobile agent has an entry in the regional binding cache for the home address in the routing header MNHA, the modified packet 61 is forwarded to the access router AR that forwards it further to the link where the cellular access point CAP is connected. The packet 61 is modified in a cellular access point that comprises binding information between AR@ and PCoA. In the packet 62, the destination field is set to PCoA. The mobile node sends packet 63 to the correspondent node using PCoA as the source address exactly as with the basic mobile IPv6.

In the regional route updates in handovers, the invention applies an already known method for performing a mobile user terminal route update in a telecommunication network operated based on the Internet Protocol. Radio access specific mobility functions are synchronized with the Mobile IPv6 functions in the cellular access points that are involved in the handover. The proxy function in the cellular access point sends the route update message to the mobile agent. The route update message is named in this invention as a proxy binding update. The mobile agent replies to the cellular access point with an acknowledgement message.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. A method for local mobility management in a communications network comprising at least a home agent (HA) connected to the Internet, a mobile agent (MA) connected to the Internet a mobile IP access network comprising one or more local IP mobility domains, a correspondent node connected to the Internet, one or more cellular access nodes (CAN) connected to the mobile IP access network; and one or more mobile nodes (MN) connected to the cellular access nodes (CAN), in which method binding updates are registered when mobile node (MN) changes location,
**characterized in that:**
the mobile node mobility inside the local mobility domain is hidden from the home agent (HA) and correspondent node (CN) by performing the IP local mobility management with proxy function not visible to the mobile node (MN) by having a proxy function in a cellular access point (CAP) responsible for MIPv6 signalling and by using a Care of Address generated based on the mobile agent's (MA) prefix and a locally unique identifier in a binding update message.

2. The method according to claim 1, **characterized in that** the network is a packet switched network.

3. The method according to claim 1 or 2, **characterized in that** the network is a cellular communications network.

4. The method according to claim 1, 2 or 3, **characterized in that** the layer 3 mobile agent prefix is broadcast over the air interface.

5. The method according to any of claims 1 - 4, **characterized in that** the locally unique identifier is the mobile agent's (MA) layer 2 address.

6. The method according to any of claim 1 - 5, **characterized in that** the cellular access point (CAP) encapsulates binding update messages.

7. The method according to any of claims 1 - 6, **characterized in that** the mobile agent (MA) creates a binding entry including a proxy care of address (PcoA) based on the mobile agent's (MA) prefix and mobile node's (MN) layer 2 address associated with an access router address.

8. The method according to claim 7, **characterized in that** the binding is updated whenever the access router (AR) changes.

9. A system for local mobility management in a communications network comprising at least:
a home agent (HA) connected to the Internet (NET);
a mobile agent (MA) connected to the Internet (NET);
a mobile IP access network (MIPAN) comprising one or more local IP mobility domains;
a correspondent node (CN) connected to the Internet (NET);
one or more cellular access nodes (CAN) connected to the mobile IP access network (MIPAN); and
one or more mobile nodes (MN) connected to the cellular access nodes (CAN);
**characterized in that:**
the cellular access node (CAN) further comprises a cellular access point (CAP) comprising a proxy function responsible for MIPv6 signalling; and
a mobile node (MN) is configured to generate a Care of Address based on the mobile agent's (MA) prefix and a locally unique identifier, and to use the Care of Address in a binding update message

10. The system according to claim 9, **characterized in that** the cellular access point (CAP) is configured to encapsulate binding update messages sent by the mobile node (MN).

11. The system according to claim 9 or 10, **characterized in that** the mobile agent (MA) is configured to create a binding entry including a proxy care of address (PcoA) based on the mobile agent's (MA) prefix and mobile node's (MN) layer 2 address associated with an access router address.

12. The system according to claim 11, **characterized in that** the mobile agent (MA) is configured to update the binding whenever the access router (AR) changes.

13. The system according to any of claims 9 - 12, **characterized in that** the locally unique identifier is the mobile agent's (MA) layer 2 address.

14. The system according to any of claims 9 - 13, **characterized in that** the network is a packet switched network.

15. The system according to any of claims 9 - 14, **characterized in that** the network is a cellular communications network.

## Patentansprüche

1. Verfahren für lokales Mobilitätsmanagement in einem Kommunikationsnetz, umfassend wenigstens einen Heimatagenten (HA), der mit dem Internet verbunden ist, einen mobilen Agenten (MA), der mit dem Internet verbunden ist, ein Mobil-IP-Zugangsnetz, das eine oder mehrere lokale IP-Mobilitätsdomänen umfasst, einen Korrespondenzknoten, der mit dem Internet verbunden ist, einen oder mehrere zellulare Zugangsknoten (CAN), die mit dem Mobil-IP-Zugangsnetz verbunden sind und einen oder mehrere Mobilknoten (MN), die mit dem zellularen Zugangsknoten (CAN) verbunden sind, wobei in dem Verfahren Bindungsaktualisierungen registriert werden, wenn ein Mobilknoten (MN) seinen Aufenthaltsort ändert,
**dadurch gekennzeichnet, dass**
die Mobilknotenmobilität innerhalb der lokalen Mobilitätsdomäne vor dem Heimatagenten (HA) und dem Korrespondenzknoten (CN) versteckt ist, indem das lokale IP-Mobilitätsmanagement mit Proxifunktion nicht sichtbar für den mobilen Knoten (MN) ausgeführt wird, indem eine Proxifunktion in einem zellularen Zugangspunkt (CAP) vorgesehen ist, der für MIPv6 Signalisierung verantwortlich ist und durch Verwendung einer Careoff-Adresse, die basierend auf dem Präfix des mobilen Agenten (MA) und einer lokal eindeutigen Kennung in einer Bindungsaktualisierungsnachricht erzeugt wird.

2. Verfahren nach Anspruch 1, **dadurch gekennzeichnet, dass** das Netz ein paketvermitteltes Netz ist.

3. Verfahren nach Anspruch 1 oder 2, **dadurch gekennzeichnet, dass** das Netz ein zellulares Kommunikationsnetz ist.

4. Verfahren nach Anspruch 1, 2 oder 3, **dadurch gekennzeichnet, dass** der Präfix des Schicht 3 mobilen Agenten über die Luftschnittstelle übertragen wird.

5. Verfahren nach einem der Ansprüche 1 bis 4, **dadurch gekennzeichnet, dass** die lokal eindeutige Kennung die Schicht-2-Adresse des mobilen Agenten (MA) ist.

6. Verfahren nach einem der Ansprüche 1 bis 5, **dadurch gekennzeichnet, dass** der zellulare Zugangspunkt (CAP) Bindungsaktualisierungsnachrichten einkapselt.

7. Verfahren nach einem der Ansprüche 1 bis 6, **dadurch gekennzeichnet, dass** der mobile Agent (MA) einen Bindungseintrag erzeugt, der eine Proxi-Careoff-Adresse (PcoA) aufweist, die auf dem Präfix des mobilen Agenten (MA) und auf der Schicht-2-Adresse des Mobilknotens (MN) basiert, die zu einer Zugangsrouteradresse gehört.

8. Verfahren nach Anspruch 7, **dadurch gekennzeichnet, dass** die Bindung aktualisiert wird, wann immer sich der Zugangsrotor (AR) ändert.

9. System für lokales Mobilitätsmanagement in einem Kommunikationsnetz, das wenigstens aufweist:
einen Heimatagenten (HA), der mit dem Internet (NET) verbunden ist;
einen mobilen Agenten (MA), der mit dem Internet (NET) verbunden ist;
ein mobiles IP-Zugangsnetz (MIPAN), das eine oder mehrere lokale IP-Mobilitätsdomänen aufweist;
einen Korrespondenzknoten (CN), der mit dem Internet (NET) verbunden ist;
einen oder mehrere zellulare Zugangsknoten (CAN), die mit dem mobilen IP-Zugangsnetz (MIPAN) verbunden sind; und
einen oder mehrere mobile Knoten (MN), die mit dem zellularen Zugangsnetz (CAN) verbunden sind;
**dadurch gekennzeichnet, dass**:
der zellulare Zugangsknoten (CAN) weiter einen zellularen Zugangspunkt (CAP) umfasst, der eine Proxifunktion umfasst, die für die MIPv6-Signalisierung verantwortlich ist; und
einen Mobilknoten (MN), der eingerichtet ist, eine Careoff-Adresse zu erzeugen, basierend auf dem Präfix des mobilen Agenten (MA) und einer lokal eindeutigen Kennung, und die Careoff-Adresse in einer Bindungsaktualisierungsnachricht zu verwenden.

10. System nach Anspruch 9, **dadurch gekennzeichnet, dass** der zellulare Zugangspunkt (CAP) eingerichtet ist, die Bindungsaktualisierungsnachricht, die von dem Mobilknoten (MN) gesendet wird, einzukapseln.

11. System nach Anspruch 9 oder 10, **dadurch gekennzeichnet, dass** der mobile Agent (MA) eingerichtet, einen Bindungseintrag zu erzeugen, der eine Proxi-Careoff-Adresse (PcoA) aufweist, die auf dem Präfix des mobilen Agenten (MA) und der Schicht-2-Adresse des Mobilknotens (MN) basiert, die zu einer Zugangsrouteradresse gehört.

12. System nach Anspruch 11, **dadurch gekennzeichnet, dass** der mobile Agent (MA) eingerichtet ist, die Bindung zu aktualisieren, wann immer sich der Zugangsrouter (AR) ändert.

13. System nach einem der Ansprüche 9 bis 12, **dadurch gekennzeichnet, dass** die lokal eindeutige Kennung die Schicht-2-Adresse des mobilen Agenten (MA) ist.

14. System nach einem der Ansprüche 9 bis 13, **dadurch gekennzeichnet, dass** das Netz ein paketvermitteltes Netz ist.

15. System nach einem der Ansprüche 9 bis 14, **dadurch gekennzeichnet, dass** das Netz ein zellulares Kommunikationsnetz ist.

## Revendications

1. Procédé de gestion de la mobilité locale dans un réseau de communications comprenant au moins un agent domestique (HA - Home Agent) connecté à l'Internet, un agent mobile (MA - Mobile Agent) connecté à l'Internet, un réseau d'accès IP mobile comprenant un ou plusieurs domaines de mobilité IP locale, un noeud correspondant connecté à l'Internet, un ou plusieurs noeuds d'accès cellulaires (CAN - Cellular Access Nodes) connectés au réseau d'accès IP mobile ; et un ou plusieurs noeuds mobiles (MN - Mobile Nodes) connectés aux noeuds d'accès cellulaires (CAN), procédé dans lequel des mises à jour de liaison sont enregistrées lorsque le noeud mobile (MN) change d'emplacement,
**caractérisé en ce que :**
la mobilité du noeud mobile à l'intérieur du domaine de mobilité locale est occulté de l'agent domestique (HA) et du noeud correspondant (CN - Correspondent Node) en assurant la gestion de la mobilité locale IP avec la fonction proxy invisible au noeud mobile (MN) en ayant une fonction proxy dans un point d'accès cellulaire (CAP - Cellular Access Point) responsable de la signalisation MIPv6 et en utilisant une adresse temporaire (Care of Address) générée sur la base du préfixe de l'agent mobile (MA) et un identifiant localement unique dans un message de mise à jour de liaison.

2. Procédé selon la revendication 1, **caractérisé en ce que** le réseau est un réseau à commutation par paquets.

3. Procédé selon la revendication 1 ou 2, **caractérisé en ce que** le réseau est un réseau de communications cellulaire.

4. Procédé selon la revendication 1, 2 ou 3, **caractérisé en ce que** le préfixe de l'agent mobile de couche 3 est diffusé sur l'interface radio.

5. Procédé selon l'une quelconque des revendications 1 à 4, **caractérisé en ce que** l'identifiant localement unique est l'adresse de couche 2 de l'agent mobile (MA).

6. Procédé selon l'une quelconque des revendications 1 à 5, **caractérisé en ce que** le point d'accès cellulaire (CAP) englobe les messages de mise à jour de liaison.

7. Procédé selon l'une quelconque des revendications 1 à 6, **caractérisé en ce que** l'agent mobile (MA) crée une entrée de liaison incluant une adresse proxy temporaire (Proxy Care of Address - PcoA) basée sur le préfixe de l'agent mobile (MA) et l'adresse de couche 2 du noeud mobile (MN) associée à une adresse de routeur d'accès.

8. Procédé selon la revendication 7, **caractérisé en ce que** la liaison est mise à jour chaque fois que le routeur d'accès (AR - Access Router) change.

9. Système de gestion de la mobilité locale dans un réseau de communications comprenant au moins :
un agent domestique (HA) connecté à l'Internet (NET) ;
un agent mobile (MA) connecté à l'Internet (NET) ;
un réseau d'accès IP mobile (MIPAN) comprenant un ou plusieurs domaines de mobilité IP locale ;
un noeud correspondant (CN) connecté à l'Internet (NET) ;
un ou plusieurs noeuds d'accès cellulaire (CAN) connectés au réseau d'accès IP mobile (MIPAN) ; et
un ou plusieurs noeuds mobiles (MN) connectés aux noeuds d'accès cellulaire (CAN) ;
**caractérisé en ce que :**
le noeud d'accès cellulaire (CAN) comprend en outre un point d'accès cellulaire (CAP) comprenant une fonction proxy responsable de la signalisation MIPv6 ; et
un noeud mobile (MN) est configuré pour générer une adresse temporaire sur la base du préfixe de l'agent mobile (MA) et un identifiant localement unique, et pour utiliser l'adresse temporaire dans un message de mise à jour de liaison.

10. Système selon la revendication 9, **caractérisé en ce que** le point d'accès cellulaire (CAP) est configuré pour englober les messages de mise à jour de liaison envoyés par le noeud mobile (MN).

11. Système selon la revendication 9 ou 10, **caractérisé en ce que** l'agent mobile (MA) est configuré pour créer une entrée de liaison incluant une adresse temporaire proxy (PcoA) sur la base du préfixe de l'agent mobile (MA) et de l'adresse de couche 2 du noeud mobile (MN) associée à une adresse de routeur d'accès.

12. Système selon la revendication 11, **caractérisé en ce que** l'agent mobile (MA) est configuré pour mettre à jour la liaison chaque fois que le routeur d'accès (AR) change.

13. Système selon l'une quelconque des revendications 9 à 12, **caractérisé en ce que** l'identifiant localement unique est l'adresse de couche 2 de l'agent mobile (MA).

14. Système selon l'une quelconque des revendications 9 à 13, **caractérisé en ce que** le réseau est un réseau à commutation par paquets.

15. Système selon l'une quelconque des revendications 9 à 14, **caractérisé en ce que** le réseau est un réseau de communications cellulaire.
